Europäisches Patentamt

European Patent Office

Office européen des brevets

(19)

(11) Veröffentlichungsnummer: **0 224 215**

**A2**

(12) # EUROPÄISCHE PATENTANMELDUNG

(21) Anmeldenummer: 86116179.2

(22) Anmeldetag: 21.11.86

(51) Int. Cl.4: **A23L 2/10** , A23L 1/222 , B01D 1/26

(30) Priorität: 21.11.85 DE 3541243

(43) Veröffentlichungstag der Anmeldung:
03.06.87 Patentblatt 87/23

(84) Benannte Vertragsstaaten:
AT CH DE ES FR IT LI

(71) Anmelder: GEA Wiegand GmbH
Einsteinstrasse 9 - 15
D-7505 Ettlingen(DE)

(72) Erfinder: Hochberg, Ulrich, Dr.
Pfauenstrasse 29
D-7500 Karlsruhe 51(DE)
Erfinder: Toran, Josef
Burgunderplatz 2
D-7500 Karlsruhe(DE)
Erfinder: Baier, Herbert
Bienwaldstrasse 65
D-7512 Rheinstetten 1(DE)

(74) Vertreter: Fincke, Karl Theodor, Dipl.-Phys.Dr.
et al
Patentanwälte Dipl.-Ing. H.Weickmann
Dipl.-Phys.Dr. K.Fincke Dipl.-Ing.
F.A.Weickmann Dipl.-Chem. B. Huber Dr. Ing.
H. Liska Dipl.-Phys.Dr. J. Prechtel
Möhlstrasse 22
D-8000 München 80(DE)

(54) Verfahren zur Gewinnung eines Aromakonzentrats aus einem aromahaltigen Saft.

(57) Verfahren zur Gewinnung eines Aromakonzentrats aus einem aromahaltigen Saft, dadurch gekennzeichnet, daß der aromahaltige Saft einem Eindampfteil eines ersten Verdampfers zugeführt und dort teilweise eingedampft wird, daß in dem Eindampfteil dieses ersten Verdampfers entstehender Brüden als Heizmittel einem Heizteil eines zweiten Verdampfers zugeführt wird und daß der als Heizmittel dem Heizteil des zweiten Verdampfers zugeführte, nach Beheizung dieses Heizteils nicht kondensierte Brüden abgeführt und zur Gewinnung von Aromakonzentrat kondensiert wird.

## Verfahren zur Gewinnung eines Aromakonzentrats aus einem aromahaltigen Saft

Die Erfindung betrifft ein Verfahren zur Gewinnung eines Aromakonzentrats aus einem aromahaltigen Saft.

Wird aromahaltiger Saft eingedampft, so verdampft neben Wasser auch eine große Menge Aromastoffe. Diese Aromastoffe müssen konzentriert wiedergewonnen werden.

Bei einem nach dem Prospekt "Wiegand 57-o7-o2" bekannten Verfahren werden aromahaltige Brüden in eine Aromakolonne rektifiziert. Die Aromakolonne wird mit Dampf beheizt. Der Dampf, der am Kopf der Aromakolonne kondensiert wird, steht unter einem kleineren Druck als der Dampf, mit dem die Aromakolonne beheizt wird. Dies ist insbesondere dann von Nachteil, wenn die Aromakolonne in einer Eindampfanlage mit einem mechanischen Brüdenverdichter betrieben wird. Ein weiterer Nachteil ist, daß eine Aromakolonne verhältnismäßig teuer ist.

Nach der Zeitschrift "Food Technology", Vol. 23, 83, January 1969, Seite 83 bis 86, ist es bekannt, zur Gewinnung eines wässrigen Aromakonzentrats hoher Konzentration nicht kondensierbare Gase in einen Sumpf einer Strip-Kolonne einzuleiten und Aromakonzentrat vom Kopf dieser Strip-Kolonne abzuziehen. Der Anlageaufwand, insbesondere zur Kühlung der nicht kondensierbaren Gase, ist dabei beträchtlich. Außerdem ist auch eine Strip-Kolonne verhältnismäßig teuer.

Aufgabe der Erfindung ist es, ein Verfahren nach dem Oberbegriff des Anspruchs 1 anzugeben, das mit hohem Wirkungsgrad bei verhältnismäßig geringem Energieaufwand mit einer verhältnismäßig billigen Anlage durchzuführen ist.

Die Lösung dieser Aufgabe ist im Kennzeichen des Anspruchs 1 angegeben.

Vorteilhafte Ausgestaltungen der Erfindung sind in den Unteransprüchen angegeben.

Bei dem erfindungsgemäßen Verfahren wird der dem zweiten Verdampfer als Heizmittel zugeführte Brüden dort zum größten Teil kondensiert. Der nicht kondensierte Brüden wird abgezogen und zur Gewinnung des Aromakonzentrats getrennt kondensiert. Der nicht kondensierte Brüden kann dabei mehr als 9o% der wichtigen Aromakomponente enthalten. Im Heizteil des zweiten Verdampfers kondensierter Brüden kann auf einen niedrigeren Druck entspannt werden und dem Heizteil des dritten Verdampfers als Heizmittel zugeführt werden, der vom Brüden des im zweiten Verdampfer eingedampften Saftsbeheizt wird. Der nicht kondensierte Brüden des dritten Verdampfers kann zur Gewinnung eines weiteren Anteils von Aromakonzentrat ebenfalls kondensiert werden (Anspruch 2). Besonders hohe Ausbeuten an Aromastoffen erhält man, wenn wenigstens der zweite Verdampfer ein Fallstromverdampfer ist (Anspruch 5).

Um den Anteil der Aromastoffe, die im zweiten Verdampfer kondensieren, zu verkleinern, wird bevorzugt ein Inertgas in den Heizteil des zweiten Verdampfers eingeführt (Anspruch 3). Das Inertgas schleppt Aromastoffe aus solchen Gebieten des Heizteils des zweiten Verdampfers mit aus, in denen ohne Inertgas infolge sehr kleiner Strömungsgeschwindigkeiten Verluste an kondensierbaren Aromastoffen auftreten würden.

Zur weiteren Energieeinsparung wird bevorzugt ein Vorwärmer mit den nicht kondensierten, aromareichen Brüden beheizt (Anspruch 4).

Gleichwenn es auch in der Regel vorteilhaft ist, aus dem Eindampfteil des ersten Verdampfers abgeführten Saftrest in einem Eindampfteil des zweiten Verdampfers teilweise einzudampfen (Anspruch 6), so ist dies doch nicht notwendig: Aus dem Eindampfteil des ersten Verdampfers abgeführter Saftrest kann zur weiteren Verarbeitung abgeführt werden, und der Eindampfteil des zweiten Verdampfers kann in anderer Weise beschickt werden.

Versuche haben erwiesen, daß die Aromaausbeute bei Anwendung des erfindungsgemäßen Verfahrens sogar höher liegen kann als bei Aromagewinnungsanlagen mit Rektifikation, obwohl der Anlagenaufwand erheblich kleiner ist. Der Energieverbrauch ist in jedem Fall im Vergleich zu herkömmlichen Anlagen wesentlich geringer, insbesondere, wenn die als Heizmittel verwendeten Brüden in bekannter Weise mechanisch verdichtet werden. Die wichtigsten Gründe für die hohe Aromaausbeute bei Anwendung des erfindungsgemäßen Verfahrens sind:

1. Die Aktivitätskoeffizienten von Aromastoffen in verdünnten, wässrigen Lösungen sind sehr groß.

2. Die Aromastoffe sind bei dem erfindungsgemäßen Verfahren nur wenige Sekunden höheren Temperaturen ausgesetzt und zersetzen sich daher nur in geringem Maße.

Eine Anlage zur Durchführung des erfindungsgemäßen Verfahrens wird im folgenden unter Hinweis auf die beigefügten Zeichnungen erläutert.

Aromahaltiger Frischsaft wird über eine Leitung 2o in einen Vorwärmer 22 eingeführt und von dort über eine Leitung 24 in ein Rohrbündel 8 eines ersten Verdampfers 2 eingeführt und dort teilweise verdampft. Der verbleibende Saft wird über eine Leitung 26 in ein Rohrbündel 1o eines zweiten Verdampfers 4 eingeführt und dort ebenfalls teilweise verdampft. Der dann verbleibende Saft wird über eine Leitung 28 und ein Rohrbündel 12 einem dritten Verdampfer 6 zugeführt und dort erneut verdampft. Der verbleibende Saft wird über eine Leitung 3o zum gegebenenfalls weiteren Konzentrieren abgezogen, der verbleibende Brüden über eine Leitung 52 einem Kondensator und/oder einem thermischen oder mechanischen Brüdenverdichter und/oder wenigstens einem weiteren Verdampfer zugeführt.

Ein Heizraum 14 des ersten Verdampfers 2 wird mit Frischdampf oder komprimierten Brüden geheizt, die über die Leitung 32 zugeführt und in bekannter, nicht dargestellter Weise abgezogen werden. Die Beheizung kann auch mit Brüden aus einem (nicht dargestellten) Verdampfer erfolgen, in dem vorkonzentrierter Saft aufkonzentriert wird

In dem ersten Verdampfer 2 entstehender Brüden wird über eine Leitung 34 einem Heizraum 16 des zweiten Verdampfers 4 als Heizmittel zugeführt. In dem Heizraum 16 nicht kondensierter Brüden wird über eine Leitung 36 abgezogen und dem Vorwärmer 22 als Heizmittel zugeführt. Inertgas wird in den Heizraum 16 des zweiten Verdampfers 4 über eine Leitung 38 eingeführt.

In dem zweiten Verdampfer 4 gebildeter Brüden wird über eine Leitung 46 einem Heizraum 18 des dritten Verdampfers 6 zugeführt. Dort nicht kondensierter Brüden wird über eine Leitung 48 dem Vorwärmer 22 als Heizmittel zugeführt.

Im Heizraum 16 des Verdampfers 4 kondensierter Brüden wird über eine Leitung 4o einem Drosselorgan 42 zugeführt, dort zur teilweisen Verdampfung entspannt und anschließend über eine Leitung 44 in den Heizraum 18 des dritten Verdampfers 6 eingeführt.

Aus dem Vorwärmer 22 wird über eine Leitung 5o der vordem als Heizmittel dienende aromareiche Brüden abgeführt und einem an sich bekannten Wäscher zugeführt, in dem das Inertgas von dem Aromakonzentrat getrennt wird.

In dem Heizraum 18 des dritten Verdampfers 6 kondensierter Brüden wird über eine Leitung 54 abgeführt.

Die Verdampfer arbeiten bei unterschiedlichen Drücken, so daß mit dem Brüden des ersten Verdampfers 2 der zweite Verdampfer 4 und mit dem Brüden des zweiten Verdampfers 4 der dritte Verdampfer 6 beheizt werden kann.

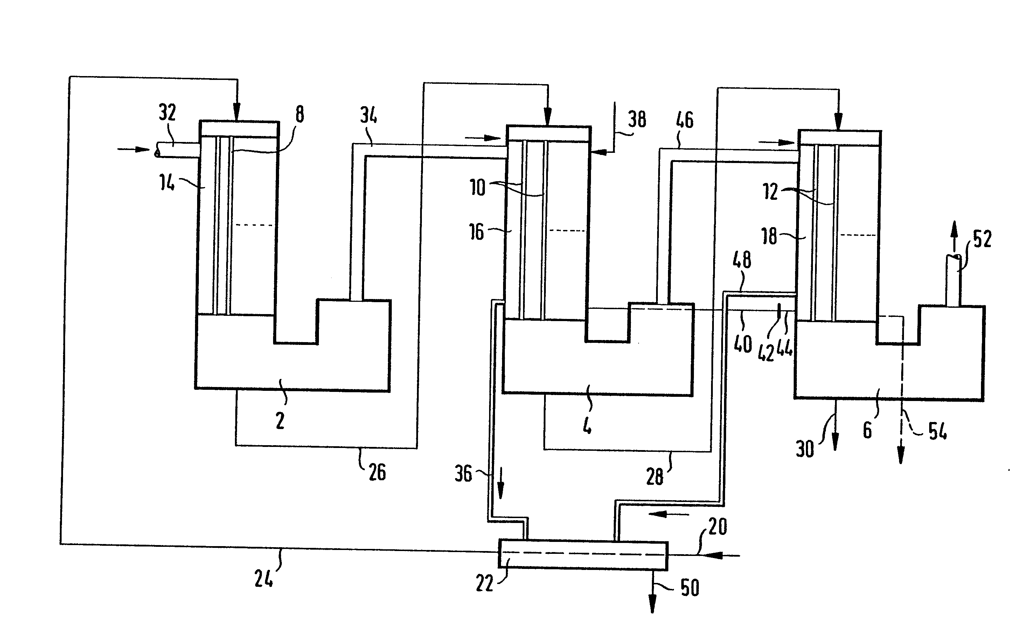

**Ansprüche**

1. Verfahren zur Gewinnung eines Aromakonzentrats aus einem aromahaltigen Saft, bei dem der aromahaltige Saft einem Eindampfteil (8) eines ersten Verdampfers (2) zugeführt und dort teilweise eingedampft wird, bei dem in dem Eindampfteil (8) dieses ersten Verdampfers (2) entstehender Brüden als Heizmittel einem Heizteil (16) eines zweiten Verdampfers (4) zugeführt wird und bei dem der als Heizmittel dem Heizteil (16) des zweiten Verdampfers (4) zugeführte Brüden nach Beheizung dieses Heizteils (16) abgeführt und zur Gewinnung von Aromakonzentrat kondensiert wird, dadurch gekennzeichnet, daß der gesamte im Heizteil (16) des zweiten Verdampfers (4) nicht kondensierte Brüden aus dem Heizteil (16) des zweiten Verdampfers (4) abgeführt und zur Gewinnung des Aromakonzentrats kondensiert wird.

2. Verfahren nach Anspruch 1, dadurch gekennzeichnet, daß in dem Eindampfteil (1o) des zweiten Verdampfers (4) entstehender Brüden als Heizmittel einem Heizteil (18) eines dritten Verdampfers (6) zugeführt, wird daß aus dem Eindampfteil des zweiten Verdampfers abgeführter Saftrest in einem Eindampfteil des dritten Verdampfers teilweise eingedampft wird, daß in dem Heizteil (16) des zweiten Verdampfers (4) kondensierter Brüden entspannt und dem Heizteil (18) des dritten Verdampfers (6) als Heizmittel zugeführt wird und daß die als Heiz mittel dem Heizteil (18) des dritten Verdampfers (6) zugeführten, nach Beheizung dieses Heizteils (18) nicht kondensierten Brüden abgeführt und zur Gewinnung von Aromakonzentrat kondensiert werden.

3. Verfahen nach Anspruch 1 oder 2, dadurch gekennzeichnet, daß in dem Heizteil (16) des zweiten Verdampfers (4) ein Inertgas eingeführt wird.

4. Verfahren nach einem der vorgenannten Ansprüche, dadurch gekennzeichnet, daß der aus den Heizteilen (16, 18) des zweiten Verdampfers (4) und/oder des dritten Verdampfers (6) abgeführte, nicht kondensierte Brüden als Heizmittel einem Vorwärmer (22) für den dem Eindampfteil (14) des ersten Verdampfers (2) zugeführten Saft zugeführt wird.

5. Verfahren nach einem der vorgenannten Ansprüche, dadurch gekennzeichnet, daß wenigstens der zweite Verdampfer (4) ein Fallstromverdampfer ist.

6. Verfahren nach einem der vorgenannten Ansprüche, dadurch gekennzeichnet, daß aus dem Eindampfteil (8) des ersten Verdampfers (2) abgeführter Saftrest in einem Eindampfteil (1o) des zweiten Verdampfers (4) teilweise eingedampft wird.

0 224 215